# EUROPEAN PATENT SPECIFICATION

(11) **EP 0 509 627 B1**
(45) Date of publication and mention of the grant of the patent: **04.09.1996**
(21) Application number: 92300295.0
(22) Date of filing: 14.01.1992
(51) Int. Cl.: F16C 35/06, F16C 33/76

(54) **Static sealing device mounted between the inner races of two bearings and a shaft**
Statische Dichtung zwischen den Innenringen zweier Wälzlager und einer Welle
Etanchéité statique entre les bagues internes de deux roulements et un arbre

(30) Priority: 15.04.1991 US 685039
(43) Date of publication of application: 21.10.1992
(73) Proprietor: THE TIMKEN COMPANY, Canton, Ohio 44706 (US)
(72) Inventor: Otto, Dennis L., Malvern, Ohio 44644 (US); Seth, Raj B., Canton, Ohio 44708 (US)
(74) Representative: Brooke-Smith, Fred

(56) References cited:
- DE-A- 3 915 624
- FR-A- 2 412 745
- US-A- 1 783 791
- US-A- 1 840 552
- US-A- 3 958 847
- US-A- 3 986 754
- US-A- 4 509 607
- US-A- 4 692 040

## Description

This invention relates to bearing assemblies for rotary members, for example for the work rolls of rolling mills.

The bearings on which work rolls of rolling mills turn are subjected to hostile environments in which the bearings are called upon to sustain heavy radial loads exerted by the passage of components which require shaping by the rolls supported on bearings carrying the roll necks in supporting chocks. The forming process subjects the rolls to high pressures and impacts as the chocks in which the bearings are housed yield to radial and axial displacement. Such bearings require seals which exclude contaminants while the displacement occurs in the bearing assembly.

The problem of excluding contaminants has been attacked in many ways such as by T-shaped spacers between the inner race members of adjacent bearings. Such seals have been found ineffective to exclude water which is used to control bearing heat. During operation of the mill rolls, the inner race rings tend to separate due to changes in the direction of the thrust loads, thereby allowing water and water born contaminants to enter. This results in wear of the end faces of the inner race rings, which permits drastic water and contaminant ingress to the bearing assembly.

This problem of the foregoing character has been addressed by bearing manufacturers in respect of protecting bearings in work or back-up rolls of a rolling mill. One example is seen in U.S. Patent No. 4692040 which illustrates a sealing arrangement used where the inner end faces of the inner race rings abut one another. However, none of the several designs shown in this patent cope effectively with the inner race ring separation which occurs in service.

In US 4692040 a bearing arrangement is shown having a plurality of inner and outer race members with rolling elements therebetween. The inner race members are shown in abutment with one another and with a seal located in counterbores in the inner race members. A variety of different seals are described having a maximum of only two axially spaced sealing elements.

An alternative bearing arrangement is shown in DE 3915624. In this arrangement the inner race members are not in abutment and instead are separated by a seal which extends axially into shoulders provided in the outer faces of the inner members.

According to this invention there is provided a bearing assembly for supporting a rotary shaft and comprising inner race members for positioning on the rotary shaft in axial abutment with each other, outer race members encircling the inner race members, bearing elements disposed radially between and in rolling engagement with said inner and outer race members, said inner members having counterbores extending axially along the rotary shaft from the abutting ends of said inner race members, seal means positioned in said counterbores and having seal elements axially spaced away from each other at opposite sides of said abutting ends of the inner race members and respectively engaging said counterbores and means exerting a radially outwardly directed pressure on said seal means to press said seal means into engagement with the counterbores, characterized in that the seal means includes a further seal portion axially spaced from said seal elements and engaging the surface of the bores at each axial side of said abutting ends and in that said means exerting a radially outwardly directed pressure on the seal means is adapted to fit loosely on the shaft and operates to press said seal elements into sealing engagement with the respective counterbores.

The invention will now be described in more detail with reference by way of example to the accompanying drawings in which:
Figure 1 is a fragmentary sectional view of so much of the bearing for supporting a roll neck of a rolling mill thought to present the environment of the invention;
Figure 2 is an enlarged and fragmentary detail of the axial under cut for receiving the sealing means; and
Figure 3 is a modified sealing means for the environment illustrated in Figure 2.

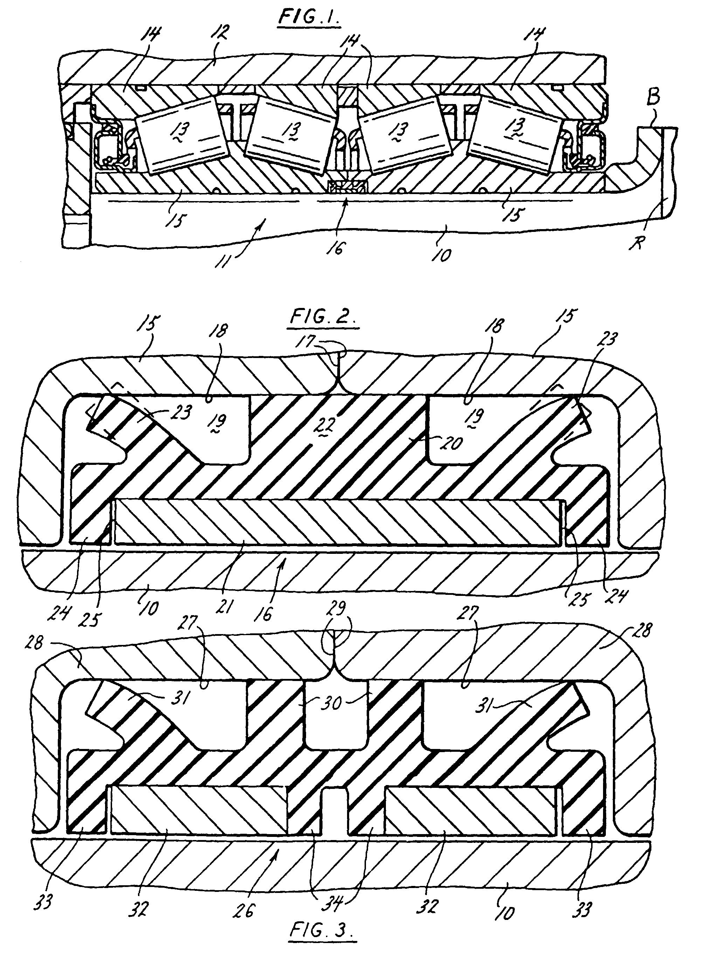

Referring to Figure 1, a roll R of a rolling mill is formed with a roll neck 10 which is supported for rotation in a bearing assembly 11 of a type partly seen in section carried in a roll neck housing 12. The bearing assembly is a multi-row assembly having rolling elements 13 operatively positioned between outer race members 14 and inner race members 15. However, the bearing assembly may have other inner and outer race members to supporting rolling elements. It can be seen that the inner race members 15 are arranged in axial abutment with each other and have a common seal assembly 16. In this instance, there is a backing ring B at the radiussed shoulder between the roll R and the neck 10.

In other arrangements not illustrated, the bearing assembly may have more than two axially abutting inner race members 15, and in such arrangements each two abutting race members 15 have a common seal assembly 16.

Turning now to Figure 2, there is shown in fragmentary and enlarged detail a typical axial bore seal assembly 16, which possesses the following characteristics. The abutting faces 17 of the two inner race members 15 are each axially undercut to present a counterbore 18 to the roll neck shaft 10, and the central space formed by the cooperating bores 18 accommodates an elastomeric seal element 20 pressed into sealing position by a metallic snap ring 21 loosely mounted on the roll neck 10.

The seal element 20 is formed as a pad 22 which spans the joint between the abutting end faces 17. The pad 22 is flanked on each side by a resilient sealing lip 23 and the pad 22 is retained in operating positions by the formation of opposite end flanges 24 which embrace the ends 25 of the ring 21. This seal assembly 16 is operative to prevent water and contaminants having access to the end faces 17 during separation of those end faces 17. The sealing lips 23 operate on the surface of the counterbore 18 to have an interference fit which is determined by the pad 22 between the lips 23. The seal element 20 is expanded radially outwardly by the snap ring 21 which acts as a spring to force the seal positioning pad 22 against the counterbores 18 of inner race members 15. The larger radial dimension of the sealing lips 23 relative to the radial dimension of the pad 22, when the seal is in the free state, forces the sealing lips 23 to flex into an interference fit with the counterbores 18. The axially outwardly directed angular position of the sealing lips 23 relative to the faces 27 acts to prevent water and contaminant ingress to the void or space between the lips 23 and the pad 22. Axial movement of the seal element relative to the two inner race members 15 is limited to the small axial dimensions between the end flanges 24 and the respective opposing end faces of the counterbores.

An important feature of the illustrated arrangement, in addition to the foregoing, is that if water and contaminants enter the voids 19 on one or on each side of the pad 22, the wear induced on the pad thereby will occur on the outer surface of the pad 22 which results in the ring 21 expanding radially outwardly because of the wear, thereby increasing the pressure of the seal lips 23 on the counterbore surfaces 18, which increases the interference fit of these seals. That increase in the fit of the seal lips 23 improves the ability of the seals to exclude the water and contaminants.

A continuing problem in maintaining a proper seal in the bearings for supporting the roll neck in a severe hot mill is related to the multiple row roller bearings where the inner members of the bearings undergo periodic axial separation from a desired position of abutment. When the inner members separate, water and contaminants can, in the absence of an effective seal, enter the bearing because in a hot mill water is used to cool the roll neck bearings. The entry of the water and all the contaminants that it may bring causes wear of the inner members. Attempts have been made to mount a seal unit between the inner members to exclude water and contaminants. One attempt to overcome the problem is seen in U.S. Patent 4692040 before noted. It is believed that the illustrated seal arrangements herein provide a better seal as they continue to maintain an effective seal as wear occurs. Wear compensation is an important feature of the bearing as it overcomes the expense of dismantling the mill bearings to replace a seal that does not have any means to compensate for wear.

A modified bearing seal assembly 26 as seen in Figure 3 is mounted in the undercut bores 27 in the inner members 28. The inner race members 28 are in axial abutment at the adjacent ends 29. The abutting ends 29 require protection from water and contaminants that can be brought in when the ends 29 separate during operation of the mill roll R. The seal assembly 26 in this arrangement is formed with duplicate seal pads 30 positioned on opposite sides of the zone of abutment of the ends 29 and each seal pad 30 is associated with a flexible seal lip 31 abutting the undercut surfaces 27 to exclude contaminants and water from the seal pads 30.

Since there are a pair of pads 30, each such pad is radially pressed against the undercut surface 27 by a snap ring 32 loosely mounted on the roll neck 10. These rings 32 also assist in retaining the pads 30 in proper position by furnishing a locating function where each is embraced by depending flanges 33 adjacent the respective lip seals 31, and by centering flanges 34 between the rings 32.

The foregoing specification has set forth certain forms of the improved seal means excluding water and contaminants from between the inner members of roller bearings that are subjected to relative movement while in abutment. The object is to retard wear as much as possible.

Thus has been disclosed a bearing assembly for a shaft, comprising a plurality of inner race members arranged for axial abutment with each other, outer race members encircling the inner race members, and bearing elements in rolling engagement with raceways in the inner and outer race members, the abutting axial ends of each two inner race members having each an axially-extending undercut bore, and a seal assembly disposed in the undercut bores and having a first portion engaging the surface of the bore at each axial side of said abutting ends of the two inner race members, and said seal assembly having further portions spaced away from said first portion and disposed in resilient sealing engagement with the surfaces of the bores at opposite axial sides of said abutting ends of the two inner race members. The first portion may extend continuously across the location of said abutting ends or may comprise two elements engaging the bores at axially opposite sides respectively of the location of said abutting ends. The first portion is conveniently in the form of a pad or pads and operates to control the degree of deformation of said further portions of the sealing assembly.

## Claims

1. A bearing assembly for supporting a rotary shaft and comprising inner race members (15; 28) for positioning on the rotary shaft (10) in axial abutment with each other, outer race members (14) encircling the inner race members, bearing elements (13) disposed radially between and in rolling engagement with said inner and outer race members, said inner members (15) having counterbores (18; 27) extending axially along the rotary shaft from the abutting ends of said inner race members, seal means (16; 26) positioned in said counterbores (18; 27) and having seal elements (23; 31) axially spaced away from each other at opposite sides of said abutting ends of the inner race members and respectively engaging said counterbores and means (21; 32) exerting a radially outwardly directed pressure on said seal means (16; 26) to press said seal means into engagement with the counterbores, characterized in that the seal means (16; 26) includes a further seal portion (22; 30) axially spaced from said seal elements (23; 31) and engaging the surface of the bores at each axial side of said abutting ends and in that said means exerting a radially outwardly directed pressure on the seal means is adapted to fit loosely on the shaft and operates to press said seal elements (23; 31) into sealing engagement with the respective counterbores.

2. A bearing assembly as claimed in claim 1, wherein said further seal portion comprises respective sealing pads (30) axially spaced at each side of the abutment between said inner race members, said seal elements (31) being respectively disposed in said counterbores in axially spaced relation from said sealing pads.

3. The bearing assembly as claimed in claim 2 wherein said pressure exerting means comprises individual pressure-exerting elements (32) at opposite axial sides of the abutting ends of the inner race members and operating to press the respective seal elements (31) and sealing pads (30) into sealing engagement with the counterbores.

4. A bearing assembly as claimed in claim 1, wherein said further seal portion is a sealing pad (22) having a surface engaging the counterbores and extending continuously across the abutment of the inner race member ends.

5. A bearing assembly as claimed in any one of the preceding claims, wherein each of said sealing elements comprises a lip seal (23; 31) to form a first barrier against contaminants reaching said further seal portion (22; 30).

6. A bearing assembly as claimed in claim 5, wherein said lip seals (23; 31) are resilient for maintaining sealing contact on said undercut bores in each of said inner members.

7. A bearing assembly as claimed in any one of the preceding claims, wherein said seal means includes flange means (24) embracing said pressure exerting means for holding said seal in said undercut bores in contaminant excluding positions in the bearing assembly.

8. A bearing assembly as claimed in any one of the preceding claims, wherein said pressure exerting means (21) is effective to expand said further seal portion (22; 30) radially outwardly as wear occurs of said further seal portion, thereby to maintain sealing engagement, and said pressure exerting means (21) presses said seal elements into sealing engagement with the surfaces of said undercut bore thereby to compensate for wear of said further seal portion.

## Patentansprüche

1. Eine Lagerzusammenstellung für die Unterstützung einer drehenden Welle bestehend aus Innenringbauteilen (15; 28) zur Einstellung auf der drehenden Welle (10) in axialer Berührung miteinander, aus Außenringbauteilen (14) die Innenringbauteile umfassend, aus Lagerelementen (13) radial angeordnet zwischen und in Wälzkontakt mit den genannten Außenring- und Innenringbauteilen (15), die genannten Innenringbauteile (15) mit Stirnsenkern (18; 27) versehen, die sich axial längs der drehenden Welle von den aneinanderstoßenden Enden der genannten Innenringbauteile erstrecken, aus Dichtungsmitteln (16; 26) in diesen Stirnsenkern (18; 27) eingestellt und mit Dichtungsmitteln (23; 31) axial mit Zwischenraum voneinander an gegenüberliegenden Seiten der genannten anstoßenden Enden der Innenringbauteile versetzt und entsprechend in den genannten Stirnsenkern eingefaßt und aus Mitteln (21; 32) die einen nach außen gerichteten Druck auf das genannte Dichtungsmittel (16; 26) ausüben um die genannten Druckmittel in Eingriff mit den Stirnsenkern zu drücken, dadurch gekennzeichnet, daß das Dichtungsmittel (16; 26) außerdem ein weiteres Dichtungsteil (22; 30) axial von den genannten Dichtungselementen (23; 31) mit Zwischenraum angeordnet und in die Oberfläche der Bohrung auf jeder axialen Seite der genannten gegeneinander stoßenden Enden eingreifend enthält und daß das genannte Mittel einen radialen Druck nach außen auf das Dichtungsmittel ausübend angepaßt ist um lose auf der Welle angebracht zu sein und wirkt um die genannten Dichtungselemente (23; 31) in Dichtungseingriff mit den entsprechenden Stirnsenkern einzudrücken.

2. Eine Lagerzusammenstellung nach Anspruch 1, in der das genannte weitere Dichtungteilstück aus den entsprechenden Dichtungskissen (30) besteht axial mit Zwischenraum auf jeder Seite der Anstoßstelle der genannten Innenringbauteile angebracht, mit den genannten Dichtungselementen (31) ensprechend in den Stirnseiten mit axialem Zwischenraum hinseitig der genannten Dichtungskissen untergebracht.

3. Eine Lagersusammenstellung nach Anspruch 2, in der das genannte Druck ausübende Mittel aus einzelnen Druck ausübenden Elementen (32) besteht an gegenüberliegenden axialen Seiten der anstoßenden Enden der Innenringbauteilen angebracht und wirkend ist die entsprechenden Dichtungselemente (31) und Dichtungskissen (30) in einen Dichtungsangriff mit den Stirnsenkern zu drücken.

4. Eine Lagerzusammenstellung nach Anspruch 1, in der der genannte weitere Dichtungsanteil ein Dichtungskissen (22) ist, das mit einer Oberfläche im Eingriff mit den Stirnsenkern steht und sich ununterbrochen über den Anstoß der Innenringbauteile erstreckt.

5. Eine Lagerzusammenstellung nach irgendeinem der vorgehenden Ansprüche, in der jedes der genannten Dichtungselemente eine Lippendichtung (23; 31) enthält, um eine erste Barriere gegen Schmutzstoffeindrang zum weiteren Dichtungsanteil (22; 30) zu bilden.

6. Eine Lagerzusammenstellung nach Anspruch 5, in der die genannten Lippendichtungen (23; 31) elastisch sind um den Dichtungskontakt an dem genannten Unterschnitt in jedem der genannten inneren Bauteilen zu erhalten.

7. Eine Lagerzusammenstellung nach irgendeinem der vorgehenden Ansprüche, in der das genannte Dichtungsmittel Flanschemittel (24) enthält die die Druck ausübenden Mittel zum Halten der genannten Dichtung in der genannten Unterschnittbohrung in Schmutzstoff entschließender Stellung in der Lagerzusammenstellung umfängt.

8. Eine Lagerzusammenstellung nach irgendeinem der vorgehenden Ansprüche, in der das Druck ausübende Mittel (21) wirksam ist das genannte weitere Dichtungsteilstück (22; 30) radial nach außen zu erweitern während Verschleiß des genannten weiteren Dichtungsteilstückes vorkommt, und das genannten Druck ausübenden Mittel (21) die genannten Dichtungselemente in Dichtungsangriff mit den Oberflächen der genannten Unterschnittbohrung drückt, um damit für Verschleiß des gesamten weiteren Dichtungteilstückes zu kompensieren.

## Revendications

1. Un dispositif de palier destiné à servir de support à un arbre rotatif et comprenant des éléments internes de voies de roulement (15,28) venant se positionner sur l'arbre rotatif (10) en position d'aboutement axial de l'un par rapport à l'autre, des éléments externes de voies de roulement (14) entourant les éléments internes, des éléments de roulement (13) placés de manière radiale entre les éléments internes et externes de voies de roulement et en position d'entraînement roulant avec ces derniers, lesdits éléments internes (15) ayant des alésoirs (18,27) se prolongeant axialement le long de l'arbre rotatif à partir des extrémités aboutées desdits éléments internes de voies de roulement, un dispositif d'étanchéité (16,26) placé dans lesdits alésoirs (18,27) et comportant des éléments d'étanchéité (23,31) espacés axialement l'un par rapport à l'autre et placés sur les côtés opposés desdites extrémités aboutées des éléments internes de voie de roulement et en position d'accouplement respectif avec lesdits alésoirs et ledit dispositif (21,32) exerçant une pression radiale orientée vers l'extérieur sur ledit dispositif d'étanchéité (16,26) afin d'entraîner ledit dispositif dans une position d'accouplement avec les alésoirs, caractérisé par le fait que le dispositf d'étanchéité (16,26) comprend une partie de joint étanche supplémentaire (22,30) axialement séparée desdits éléments d'étanchéité (23,31) et s'accouplant avec la surface des alésages sur chaque côté axial desdites extrémités aboutées et par le fait que ledit dispositif exerçant une pression dirigée vers l'extérieur sur le dispositif d'étanchéité est adapté pour pouvoir être monté sur l'arbre sans être serré sur ce dernier et sert à presser lesdits éléments d'étanchéité (23,31) dans une position d'accouplement étanche avec les alésoirs respectifs.

2. Un dispositif de palier ainsi revendiqué à la revendication 1, dans lequel ladite partie de joint étanche supplémentaire comprend des coussins d'étanchéité respectifs (30) espacés axialement sur chaque côté de l'aboutement entre lesdits éléments internes de voies de roulement, lesdits éléments d'étanchéité (31) étant respectivement disposés dans lesdits alésoirs et dans une position d'espacement axial vis-à-vis desdits coussins d'étanchéité.

3. Le dispositif de palier ainsi revendiqué à la revendication 2 dans lequel les moyens servant à exercer la pression comprennent des éléments de pression particuliers (32) situés sur les côtés axiaux opposés des extrémités aboutées des éléments internes de voies de roulement et servant à presser respectivement les éléments d'étanchéité (31) et les coussins d'étanchéité (30) dans une position d'accouplement avec les alésoirs.

4. Un dispositif de palier ainsi revendiqué à la revendication 1, dans lequel ladite partie de joint étanche supplémentaire est un coussin d'étanchéité (22) comprenant une surface s'accouplant avec les alésoirs et se prolongeant en continu le long de l'aboutement des extrémités des éléments internes de voies de roulement.

5. Un dispositif de palier ainsi revendiqué à l'une quelconque des revendications précédentes, dans lequel chacun desdits éléments d'étanchéité comprend un joint à rebord (23,31) formant une première barrière contre des produits contaminants atteignant ladite partie de joint étanche supplémentaire (22,30).

6. Un dispositif de palier ainsi revendiqué à la revendication 5, dans lequel les joints à rebord (23,31) sont élastiques afin de maintenir l'étanchéité au niveau des alésages de détalonnage dans chacun desdits éléments internes.

7. Un dispositf de palier ainsi revendiqué à l'une quelconque des revendications précédentes, dans lequel ledit dispositif d'étanchéité comprend un dispositif à rebord (24) entourant ledit dispositif de pression afin de maintenir ledit joint dans lesdits alésages de détalonnage en position d'étanchéité vis-à-vis de produits contaminants au niveau du dispositif de palier.

8. Un dispositif de palier ainsi revendiqué à l'une quelconque des revendications précédentes, dans lequel ledit dispositif de pression (21) sert à prolonger ladite partie de joint étanche supplémentaire (22,30) de manière radiale et vers l'extérieur lorsque ladite partie supplémentaire est abîmée, afin de maintenir l'accouplement étanche, et ledit dispositif de pression (21) entraîne lesdits éléments d'étanchéité dans une position d'accouplement étanche avec les surfaces dudit alésage de détalonnage, afin de compenser l'usure de ladite partie supplémentaire.
